# EUROPEAN PATENT APPLICATION

(11) **EP 4 644 174 A1**
(43) Date of publication of application: **05.11.2025**
(21) Application number: 24201904.0
(22) Date of filing: 23.09.2024
(51) Int. Cl.: B60N 2/70, B32B 5/24, D04H 3/16

(54) **SEAT CUSHION AND METHOD OF ASSEMBLY**

(30) Priority: 02.05.2024 US 202463641661 P; 01.08.2024 US 202463678105 P
(71) Applicant: Lear Corporation, Southfield, MI 48033 (US)
(72) Inventor: Freijy, Nizar, Oxford, MI, 48371 (US); Hallock, Joshua, Warren, MI, 48088 (US); Swikoski, Lisa, West Bloomfield, MI, 48324 (US)
(74) Representative: Grünecker Patent- und Rechtsanwälte PartG mbB

(57) **Abstract**

A seat cushion includes a mesh member embedded into a foam member. The mesh member comprises a set of filaments of polymeric material which are looped and bonded to each other. The mesh increases rigidity, cut resistance, tear resistance, and abrasion resistance of the foam member, eliminating the need for scrim and border wire in some applications.

## Description

### CROSS-REFERENCE TO RELATED APPLICATIONS

This application claims the benefit of U.S. provisional application Serial No. 63,641,661 filed May 2, 2024, the disclosure of which is hereby incorporated in its entirety by reference herein.

### TECHNICAL FIELD

This relates to a seat cushion and a method of assembling the vehicle seat cushion.

### BRIEF DESCRIPTION OF THE DRAWINGS

Figure 1 is a perspective view of an example of a vehicle seat assembly including a mesh member.
Figure 2 is schematic view of an example of a manufacturing system for making the mesh member.
Figure 3 is a cross sectional view through a first embodiment of a seat cushion assembly.
Figure 4 is a cross sectional view through a first embodiment of a seat cushion assembly.
Figure 5 is a cross sectional view through a first embodiment of a seat cushion assembly.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It is to be understood that the disclosed embodiments are merely exemplary and that various and alternative forms are possible. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ embodiments according to the disclosure.

"One or more" includes a function being performed by one element, a function being performed by more than one element, *e.g.,* in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a" and "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising" when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

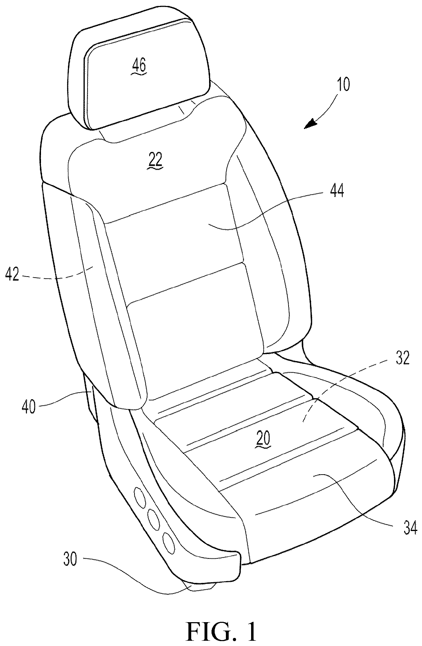

Referring to Figure 1, an example of a seat assembly 10 is shown. In some embodiments, the seat assembly 10 is a vehicle seat assembly, such as for a land vehicle like a car, truck, bus, or the like, or for a non-land vehicle like aircraft or watercraft. For example, a seat assembly 10 for a land vehicle may be shaped and sized as a front row driver or passenger seat, a second, third, or other rear row seat, and may include bucket-style seats, bench-style seats, or other seat styles. Furthermore, the seat assembly 10 may be a non-stowable seat or a stowable seat that may be foldable and stowable in a cavity in the vehicle floor. Additionally, the seat assembly 10 may be configured for non-vehicle applications such as furniture.

In the configuration shown in Figure 1, the seat assembly 10 includes a seat bottom 20 and a seat back 22. It is contemplated that the seat back 22 may be omitted in some configurations, such as when the seat assembly 10 is configured as a motorcycle seat or stool. The seat bottom 20 is configured to receive a seated occupant and support the pelvis and thighs of the seat occupant. The seat bottom 20 includes a seat bottom frame 30, a cushion 32, and a trim cover 34.

The seat bottom frame 30 is a structure that supports the cushion 32. The seat bottom frame 30 includes one or more structural members and may be made of any suitable material, such as a metal alloy, polymeric material, fiber reinforced polymeric material, or combinations thereof. In some configurations, the seat bottom frame 30 includes a panel, seat pan, suspension mat, or suspension wires upon which the cushion 32 is disposed.

The cushion 32 is disposed on the seat bottom frame 30. The cushion 32 is made of a compliant material that supports the seat occupant and distributes load forces from the seat occupant to the seat bottom frame 30. The cushion 32 and associated methods of manufacture will be discussed in more detail below.

The trim cover 34 covers at least a portion of the cushion 32. In addition, the trim cover 34 provides one or more visible exterior surfaces of the seat back 22. The seat occupant may be disposed on the trim cover 34 when seated upon the seat assembly 10. The trim cover 34 is made of any suitable material or materials, such as fabric, leather, leatherette, vinyl, or combinations thereof. The trim cover 34 may include a plurality of trim panels that are assembled in any suitable manner, such as by fusing or stitching. The trim cover 34 is attached to the seat bottom frame 30, the cushion 32, or both. For example, the trim cover 34 may include trim attachment features that are attached to the seat bottom frame 30, the cushion 32, or both, to inhibit removal of the trim cover 34 and help conform the trim cover 34 to the contour of the seat bottom frame 30, the cushion 32, or both. The trim cover 34 may also be attached to an attachment pad as will be discussed in more detail below.

The seat back 22 is configured to support the back of a seated occupant. The seat back 22 is disposed adjacent to the seat bottom 20. For example, the seat back 22 may be disposed above the seat bottom 20 and near the rear side of the seat bottom 20. The seat back 22 extends in a generally upward direction away from the seat bottom 20. In some configurations, the seat back 22 is mounted to the seat bottom 20 and may be pivotable with respect to the seat bottom 20. In other configurations, the seat back 22 is not mounted to the seat bottom 20. For instance, a vehicle seat back may be mounted to the vehicle body structure, such as in some second row seat assemblies. The seat back 22 includes a seat back frame 40, a cushion 42, a trim cover 44, and optionally a head restraint 46.

The seat back frame 40 is a structure that supports the cushion 42. The seat back frame 40 includes one or more structural members and may be made of any suitable material, such as a metal alloy, polymeric material, fiber reinforced polymeric material, or combinations thereof. In some configurations, the seat back frame 40 includes a panel, pan, suspension mat, or suspension wires upon which the cushion 42 is disposed. It is also contemplated that the seat back frame 40 may be integrally formed with the seat bottom frame 30 in some configurations.

The cushion 42 is disposed on the seat back frame 40. The cushion 42 is made of a compliant material that supports the seat occupant and distributes load forces from the seat occupant to the seat back frame 40. It is contemplated that the cushion 42 may be integrally formed with the cushion 32 of the seat bottom 20 or may be separate from the cushion 32 of the seat bottom 20. The cushion 42 and associated methods of manufacture will be discussed in more detail below.

The trim cover 44 covers at least a portion of the cushion 42. In addition, the trim cover 44 provides one or more visible exterior surfaces of the seat back 22. The seat occupant may be disposed on the trim cover 44 when seated upon the seat assembly 10. The trim cover 44 is made of any suitable material or materials, such as fabric, leather, leatherette, vinyl, or combinations thereof. The trim cover 44 may include one trim panel or a plurality of trim panels that are assembled in any suitable manner, such as by fusing or stitching. The trim cover 44 is attached to the seat back frame 40, the cushion 42, or both. For example, the trim cover 44 may include trim attachment features that are attached to the seat back frame 40, the cushion 42, or both, to inhibit removal of the trim cover 44 and help conform the trim cover 44 to the contour of the seat back frame 40, the cushion 42, or both. The trim cover 44 may also be attached to an attachment pad as will be discussed in more detail below.

The head restraint 46, if provided, is configured to support the head of a seat occupant. The head restraint 46 is disposed at the top of the seat back 22 or at an end of the seat back 22 that is disposed opposite the seat bottom 20. The head restraint 46 may be moveable in one or more directions with respect to the seat back 22 or may be integrally formed with the seat back 22.

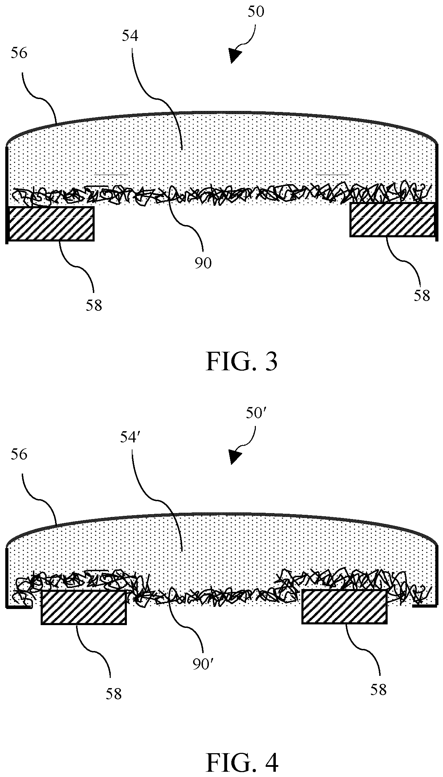

Referring to Figure 3, a cross sectional view of an example of a cushion 50 is shown. The cushion in generically designated with reference number 50 for convenience in reference. It is to be understood that the structure and description of the cushion 50 is applicable to the cushion 32 of the seat bottom 20, the cushion 42 of the seat back 22, or both.

The cushion 50 comprises a foam core 54 and a trim cover 56. In this example, edges of the trim cover are attached to members of frame 58. A non-foam component 90 is in-molded into a foam core 54. The non-foam component is primarily referred to as a mesh member but may also be referred to as a stranded member, looped member, entangled member, filament mesh structure, mesh structure, stranded mesh, looped mesh, entangled mesh, or mesh cushion. The non-foam component 90 is made of filaments 52 of polymeric material that are randomly looped, bent, curled, or entangled and are bonded together as will be discussed in more detail below. A filament 52 is directly bonded to another filament 52 rather than being indirectly bonded with a resin or other intermediate material. The embedded non-foam component 90 makes the bottom surface of the core 54 substantially more resistant to cuts, tears, and abrasion.

The filaments 52, which may also be referred to as strands or threads, are made of any suitable material or materials. In some configurations, the filaments 52 are made of a polymeric material or thermoplastic material, such as a thermoplastic resin that is polyamide-based, polyester-based, polyimide-based, polyolefin-based (e.g., polypropylene-based, polyethylene-based, etc.), polystyrene-based, or combinations thereof. As one example, a polyethylene-based filament may be made of linear low density polyethylene (LLPDE). The filament material may be recyclable unlike foam material or more easily recycled than foam material. It is also contemplated that a filament 52 may comprise reinforcement fibers and that the reinforcement fibers may not be made of a thermoplastic material.

In some configurations, a filament 52 may be a monofilament that is made of a single material. In some configurations, a filament 52 is made of multiple materials. As an example, a filament 52 made of multiple materials may include a core that is made of a first thermoplastic material and a sheath that encircles the core and is made of a second thermoplastic material that differs from the first thermoplastic material. It is contemplated that the cushion 50 may include a combination of monofilaments and filaments that are made of multiple materials and are not monofilaments. Filaments 52 that are randomly looped, bent, curled, or entangled are bonded together where one filament 52 contacts another filament 52, thereby resulting in a lightweight, air permeable mesh structure having openings or voids between the filaments 52.

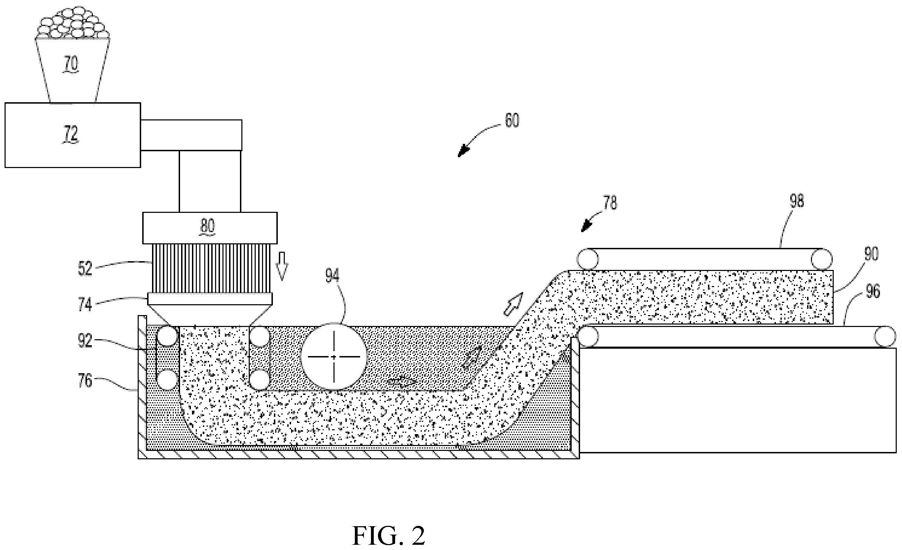

An example of a manufacturing system 60 of making a mesh structure is also shown in Figure 2. In this example, the manufacturing system 60 includes a material supply 70, an extruder 72, and a funnel 74. The manufacturing system 60 also includes a cooling tank 76 and a material handling subsystem 78.

Referring to Figure 2, the material supply 70 holds material stock that is to be extruded, such as solid beads, flakes, granules, pellets, or powder made of the material. In some configurations, the material supply 70 is configured as a container or hopper. The material supply 70 provides material stock to the extruder 72.

The extruder 72 melts the material stock and extrudes the material stock into a set of filaments 52. The extruder 72 may have any suitable configuration. In some configurations, the extruder 72 includes a barrel that receives a rotatable screw and heating elements. Rotation of the screw forces the material to move through the barrel and helps heat the material due to the friction generated as the screw rotates. The material exits the barrel under pressure and in a molten state and is transported under pressure to a die 80 of the extruder 72.

The die 80, which may also be referred to as a die plate or extrusion die, has multiple through holes or filament forming openings through which the molten material passes. A single filament 52 is extruded from each through hole. The filaments 52 fall downward from the die 80 under the force of gravity into the funnel 74.

The funnel 74 consolidates or groups the filaments 52 into a more compact arrangement in which the filaments bend, curl, or loop and a filament 52 contacts and bonds to at least one other filament 52. The funnel 74 has an inlet opening or funnel inlet and an outlet opening or funnel outlet that is smaller than the funnel inlet. Individual separated filaments 52 enter the funnel inlet. The filaments 52 bend, curl, or loop and move into contact as they accumulate. The filaments 52 move through the funnel 74 toward the funnel outlet. Some filaments may slide along the funnel 74 or an intervening sheet that is disposed on the funnel 74 as the filaments move toward the funnel outlet. Bonds are formed between filaments 52 at the points of contact while openings or voids between filaments 52 are present at other locations where one filament 52 does not contact or bond to another filament 52. The entangled and bonded filaments 52 pass through the funnel outlet of the funnel 74 and enter the cooling tank 76. For convenience in reference, the bonded filaments 52 are referred to as mesh member 90.

The cooling tank 76 holds a liquid, such as water or a mixture of water and another fluid. The liquid in the cooling tank 76 helps support the entangled and bonded filaments 52 to limit further compacting or consolidation of the filaments 52 into a less open or less porous arrangement and maintains a desired porosity and density of the mesh member 90. Thus, the liquid provides some buoyancy or resistance that can result in additional bending, curling, or looping of the filaments 52 adjacent to the surface of the liquid or within the funnel 74 to further build the mesh member 90. The liquid also cools the filaments 52 when the filaments 52 are in the liquid. For instance, the liquid cools the filaments 52 from the outside to solidify the filaments 52 and prevent the filaments 52 from bonding at additional locations. At this point, the filaments 52 are relatively stiff and no longer in a plastic state and thus generally maintain a shape and are not moldable or reformable without being reheated.

The material handling subsystem 78 transports the mesh member 90 through the cooling tank 76. The material handling subsystem 78 includes various rollers and conveyors that help move the mesh member 90 through the liquid and out of the liquid. In some configurations, a tractor conveyor 92 is provided in the cooling tank 76 to help pull the mesh member 90 away from the funnel 74 and to counter buoyancy of the filaments 52.

One or more other rollers, such as roller 94, keep the mesh member 90 submerged in the liquid and guide the mesh member 90 through the cooling tank 76. For example, the roller 94 may guide the mesh member 90 toward a conveyor belt 96 and shaker table 98 that are disposed outside of the cooling tank 76. The shaker table 98 shakes the mesh member 90 while it is on the conveyor belt 96 to remove liquid. Alternatively or in addition, the mesh member 90 may be squeezed to remove liquid, air may be blown toward the mesh member 90 to help remove liquid from the mesh member 90, or both. It is also contemplated that the mesh member 90 may also be allowed to drip dry, or dry in ambient air.

The manufacturing system 60 described above is a continuous flow process in which the mesh member 90 is formed as a continuous structure when filament extrusion is not interrupted. Further processing of the mesh member 90 is provided after exiting the cooling tank 76 to cut the mesh member 90 into individual pieces or blanks for individual cushions. Such processing is conducted by a cutting subsystem of the manufacturing system 60. The cutting system may be of any suitable type. For instance, the cutting system may employ a blade, knife, hot knife, saw, fluid jet, or the like to cut the filaments 52 of the mesh member 90 into a blank. The cutting system may be used to shape or contour the blank. It is also contemplated that a blank may be further shaped or contoured with other manufacturing processes, such as molding of the entire blank or a portion thereof.

With the above process, the cushion 50 may be formed of a set of filaments 52, wherein at least two members of the set of filaments 52 are looped and bonded to each other. In one or more embodiments, each member of the set of filaments 52 is looped and bonded to at least one other member of the set of filaments.

Referring to Figure 3, the mesh member 90 is embedded into the foam core 54 during a molding operation. While the mold is open, a sheet of mesh member 90 is placed into either the bowl or the lid of the mold and held in place, such as by magnets. The sheet thickness is selected such that the mesh member is compliant enough to conform to any mold contours. The inventors have discovered that about 10 mm thickness is suitable. Depending on the application and the density of the mesh, thinner layers may be suitable or thicker layers may be required. After the mold is closed, foam such as polyurethane is injected into the mold, penetrating into the openings or voids of the mesh member 90 and surrounding the individual filaments 52. Finally, the mold is re-opened, and the core 54 with the embedded mesh member 90 is removed.

Embedding the mesh member 90 in the foam core 54 along the bottom surface of the foam core makes the foam core more resistant to cutting or wear. This may eliminate the need to use scrim between the foam and other parts, such as the frame members 58.

Alternatively, the mesh member could be attached to the surface of the core following the molding process. Or, is some embodiments, the mesh member may be adhered to a mating component, such as frame member 58, or simply placed between the two elements.

Figure 4 illustrates a seat cushion 50' in which the bottom surface of the core 54' has channels into which the frame members 58 extend. The mold for core 54' would have complementary features. A sheet of mesh member 90 would likely not conform well to the surface of such a mold. In this case, a pre-formed mesh member 90' is used. The pre-formed mesh member 90' is created by the same process 60 with minor adjustments. The rollers 92 and 94 may be positioned differently or contoured differently such that the mesh member is thicker in the regions that will eventually be near the frame members. The further processing steps may include removing material such that the resulting mesh member 90' fits snuggly around the sharply contoured surface of the mold.

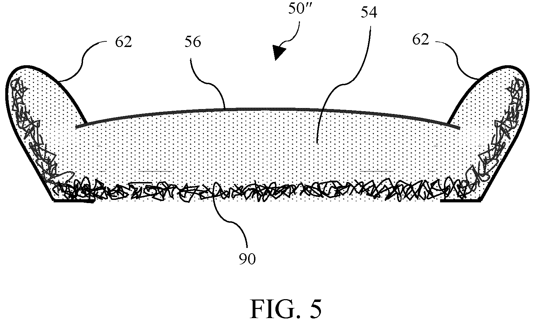

Figure 5 illustrates a seat cushion 50" which includes side bolsters 62. These help to keep the occupant centered in the seat. However, there is a tendency for the bolsters to hinge (deflect outwards) if the core is not sufficiently rigid. The foam itself may not provide sufficient rigidity. In the example of Figure 5, the mesh member extends up into the bolsters. The mesh member 90 increases the rigidity of the core 54. Inclusion of the mesh member may eliminate the need to include a border wire.

While exemplary embodiments are described above, it is not intended that these embodiments describe all possible forms according to the disclosure. In that regard, the words used in the specification are words of description rather than limitation, and it is understood that various changes may be made without departing from the scope of the disclosure. Additionally, the features of various implementing embodiments may be combined to form further embodiments according to the disclosure.

Aspect 1. An assembly comprising a mesh member (e.g., stranded member, looped member, entangled member, filament mesh structure, mesh structure, stranded mesh, looped mesh, entangled mesh, mesh cushion), the mesh member comprising a set of filaments (e.g., strands or threads) of polymeric material (e.g., a thermoplastic material or thermoplastic resin that is polyamide-based, polyester-based, polyimide-based, polyolefin-based (e.g., polypropylene-based, polyethylene-based, etc.), polystyrene-based, or combinations thereof), wherein at least two members of the set of filaments are looped and bonded to each other; and a foam (e.g. polyurethane) member at least partially surrounding the filaments of the mesh member and at least partially filling interstitial spaces between the filaments of the mesh member.

Aspect 2. The assembly of aspect 1 wherein the mesh member is adjacent to a bottom surface of the foam member to prevent the frame from tearing the foam.

Aspect 3. The assembly of aspect 2 wherein the foam member comprises a central portion and two bolsters, the bolsters symmetrically attached to opposite sides of the central portion and extending beyond a top surface of the central portion opposite the bottom surface.

Aspect 4. The assembly of aspect 3 wherein the mesh member extends from a first of the bolsters through the central portion and into a second of the bolsters to provide additional rigidity to the bolsters.

Aspect 5. The assembly of aspects 3 or 4 wherein no wire extends between the central portion and either of the bolsters.

Aspect 6. The assembly of one of aspects 1 to 5 wherein the foam member and the mesh member have recesses.

Aspect 7. The assembly of one of aspect 1 to 6 wherein the foam member comprises polyurethane.

Aspect 8. The assembly of one of aspects 1 to 7 wherein the assembly comprises a seat bottom cushion.

Aspect 9. The assembly of one of aspects 1 to 7 wherein the assembly comprises a seat back cushion.

Aspect 10. A method of fabricating a seat cushion comprising placing a mesh member into a mold, wherein the mesh member (e.g., stranded member, looped member, entangled member, filament mesh structure, mesh structure, stranded mesh, looped mesh, entangled mesh, mesh cushion) comprises a set of filaments (e.g., strands or threads) of polymeric material (e.g., a thermoplastic material or thermoplastic resin that is polyamide-based, polyester-based, polyimide-based, polyolefin-based (e.g., polypropylene-based, polyethylene-based, etc.), polystyrene-based, or combinations thereof), wherein at least two members of the set of filaments are looped and bonded to each other; and injecting foam into the mold such that the foam at least partially surrounds the filaments and fills interstitial spaces between the filaments.

Aspect 11. The method of aspect 10 further comprising extruding the polymeric material through a plurality of openings in a die plate to form the set of filaments; and depositing the set of filaments onto a conveyor to form the mesh member.

Aspect 12. The method of aspect 11 further comprising immersing the mesh member in a fluid (e.g. a liquid) to cool the filaments.

Aspect 13. The method of one of aspects 10 to 12 further comprising processing (cutting, etc.) the mesh member before placing the mesh member into the mold such that the mesh member conforms to a surface of the mold.

Aspect 14. The method of one of aspects 10 to 13 wherein a thickness of the mesh member is between 10 mm and 25 mm.

Aspect 15. The method of one of aspects 10 to 14 further comprising removing a cushion from the mold, the cushion comprising the foam and the mesh member; and covering at least a first surface of the cushion with a trim cover.

Aspect 16. The method of aspect 15 further comprising attaching a frame to a second surface of the cushion opposite the first surface.

Aspect 17. The method of aspect claim 16 wherein scrim is not used between the frame and the second surface.

Aspect 18. A seat assembly comprising: a mesh member (e.g., stranded member, looped member, entangled member, filament mesh structure, mesh structure, stranded mesh, looped mesh, entangled mesh, mesh cushion), the mesh member comprising a set of filaments (e.g., strands or threads) of polymeric material (e.g., a thermoplastic material or thermoplastic resin that is polyamide-based, polyester-based, polyimide-based, polyolefin-based (e.g., polypropylene-based, polyethylene-based, etc.), polystyrene-based, or combinations thereof), wherein at least two members of the set of filaments are looped and bonded to each other; a foam (e.g. polyurethane) member bonded to the filaments of the mesh member; and a frame fixed to the mesh member

Aspect 19. The seat assembly of aspect 18 wherein the foam member surrounds the filaments of the mesh member and fills interstitial spaces between the filaments of the mesh member.

Aspect 20. The seat assembly of aspect 18 or 19 wherein the foam member comprises a central portion and two bolsters, the bolsters symmetrically attached to opposite sides of the central portion; and the mesh member extends from a first of the bolsters through the central portion and into a second of the bolsters to provide additional rigidity to the bolsters.

## Claims

1. An assembly comprising:
a mesh member, the mesh member comprising a set of filaments of polymeric material, wherein at least two members of the set of filaments are looped and bonded to each other; and
a foam member at least partially surrounding the filaments of the mesh member and at least partially filling interstitial spaces between the filaments of the mesh member.

2. The assembly of claim 1 wherein the mesh member is adjacent to a bottom surface of the foam member.

3. The assembly of claim 2 wherein the foam member comprises a central portion and two bolsters, the bolsters symmetrically attached to opposite sides of the central portion and extending beyond a top surface of the central portion opposite the bottom surface.

4. The assembly of claim 3 wherein the mesh member extends from a first of the bolsters through the central portion and into a second of the bolsters and/or wherein no wire extends between the central portion and either of the bolsters.

5. The assembly of any of the preceding claims, wherein the foam member and the mesh member have recesses and/or wherein the foam member comprises polyurethane.

6. The assembly of any of the preceding claims, wherein the assembly comprises a seat bottom cushion and/or wherein the assembly comprises a seat back cushion.

7. A method comprising:
placing a mesh member into a mold, wherein the mesh member comprises a set of filaments of polymeric material, wherein at least two members of the set of filaments are looped and bonded to each other; and
injecting foam into the mold such that the foam at least partially surrounds the filaments and fills interstitial spaces between the filaments.

8. The method of claim 7 further comprising:
extruding the polymeric material through a plurality of openings in a die plate to form the set of filaments; and
depositing the set of filaments onto a conveyor to form the mesh member.

9. The method of claim 8 further comprising immersing the mesh member in a fluid to cool the filaments.

10. The method of any of claims 7 to 9, further comprising processing the mesh member before placing the mesh member into the mold such that the mesh member conforms to a surface of the mold.

11. The method of any of claims 7 to 10 wherein a thickness of the mesh member is between 10 mm and 25 mm.

12. The method of any of claims 7 to 11 further comprising:
removing a cushion from the mold, the cushion comprising the foam and the mesh member; and
covering at least a first surface of the cushion with a trim cover.

13. The method of claim 12 further comprising attaching a frame to a second surface of the cushion opposite the first surface, preferably wherein scrim is not used between the frame and the second surface.

14. An assembly comprising:
a mesh member, the mesh member comprising a set of filaments of polymeric material, wherein at least two members of the set of filaments are looped and bonded to each other;
a foam member bonded to the filaments of the mesh member; and
a frame fixed to the mesh member.

15. The assembly of claim 14 wherein the foam member surrounds the filaments of the mesh member and fills interstitial spaces between the filaments of the mesh member,
and/or wherein
the foam member comprises a central portion and two bolsters, the bolsters symmetrically attached to opposite sides of the central portion; and
the mesh member extends from a first of the bolsters through the central portion and into a second of the bolsters.
